# EUROPEAN PATENT APPLICATION

(11) **EP 3 560 898 A1**
(43) Date of publication of application: **30.10.2019**
(21) Application number: 19169791.1
(22) Date of filing: 17.04.2019
(51) Int. Cl.: C03C 21/00, A47B 73/00, A47G 23/02

(54) **APPARATUS FOR HOLDING GLASS ARTICLES DURING ION-EXCHANGE PROCESSING**

(30) Priority: 27.04.2018 US 201815964081
(71) Applicant: SCHOTT Corporation, Elmsford, NY 10523 (US)
(72) Inventor: Weinhold, Carsten, Scranton, PA Pennsylvania 18510 (US)
(74) Representative: Harbach, Thomas

(57) **Abstract**

The present disclosure pertains to apparatuses that securely hold articles, and more specifically, to apparatuses that securely hold glass articles such as pharmaceutical vials during various stages of ion-exchange processing.

## Description

The present disclosure pertains to apparatuses that securely hold articles, and more specifically, to apparatuses that securely hold glass articles such as pharmaceutical vials during various stages of ion-exchange processing.

Ion-exchange is a process that chemically strengthens glass via introduction of compressive stress. During ion-exchange processing, glass articles are submerged in an ion-exchange bath, and upon completion of the ion-exchange, the articles are removed from the bath and cleaned. It is critical to hold the glass articles securely for complete submersion without introduction of flaws on the glass surface prior to submersion or upon removal from the bath. It is important that all surfaces of the glass article are in contact with the ion-exchange bath, i.e. (1) the contact area between the article holder and the glass article should be as small as possible, and (2) entrapment of air in or around the glass article should be avoided. It is also important to separate the glass articles from each other and restrict the movement of the glass articles to avoid glass-to-glass contact, to limit the force of blunt fixture-to-glass impact, and to prevent the introduction of surface flaws.

Specifically, if the ion-exchange bath is a molten salt bath, and especially if the glass articles to be treated are pharmaceutical glass vials, the article holder should:
- Allow the articles to be tilted during submersion to avoid entrapment of air and ensure complete filling of the articles within the ion-exchange bath;
- Allow the articles to be tilted upon removal from the ion-exchange bath to recover the molten salt from the inside of the articles;
- Have no dead zones where air can be entrapped during submersion and/or where salt can collect and solidify after removal from the bath; and/or
- Provide equal access to the articles during the ion exchange process without a substantial obstruction of the processing fluids.

The present disclosure pertains to apparatuses that securely hold and release articles, and more specifically, to apparatuses that securely hold glass articles such as pharmaceutical vials during various stages of ion-exchange processing. The apparatuses of some embodiments of the disclosure can meet one or more of the following design goals:
- Mass-production from readily available materials (such as electro-polished and drawn stainless steel wire), easy to clean, and avoid glass-to-glass and fixture-to-glass contact;
- Article engagement preferentially in the neck area which is well-defined for secure holding and less prone to breakage;
- Minimal obstruction to fluid flow around the articles and allow for contact of all interior and exterior surfaces of the articles with the processing fluids;
- Simultaneous rotation of a plurality of articles using a tip/tilt mechanism;
- Combination of a multitude of article holders in a suitable cage to form a larger unit;
- Simultaneous rotation of a plurality of articles while being submerged to assist with the removal of air and while outside of the bath to drain fluids from the articles; and/or
- Manual, semi-automatic or automatic handling.

A contribution to solving at least one of the objects according to the invention is made by an embodiment 1 of an apparatus 1 for holding one or more articles, the apparatus 1 comprising an article holder comprising an article receiving section and a connecting section, wherein the article holder is configured to move between an open position and a closed position, wherein the article receiving section comprises a first receiving element and a second receiving element and the connecting section comprises a first connecting element moveably, preferably pivotably, connected to a second connecting element, wherein, when the article holder moves from the open position to the closed position, the distance between the first receiving element and the second receiving element decreases and the distance between the first connecting element and the second connecting element decreases, thereby causing the articles to be held between the first receiving element and the second receiving element.

In an embodiment 2 of the apparatus 1 according to the invention, the apparatus 1 is designed according to its embodiment 1, wherein the article has a body section and a neck section, and the first receiving element and the second receiving element contact substantially opposite sides of the body section to hold the articles.

In an embodiment 3 of the apparatus 1 according to the invention, the apparatus 1 is designed according to its embodiment 1, wherein the article has a body section and a neck section, and the first receiving element and the second receiving element contact substantially opposite sides of the neck section to hold the articles.

In an embodiment 4 of the apparatus 1 according to the invention, the apparatus 1 is designed according to its embodiment 1, wherein the article holder further comprises a body receiving section, wherein the body receiving section comprises a first body segment and a second body segment, wherein, when the article holder moves from the open position to the closed position, the distance between the first body segment and the second body segment decreases, thereby causing the articles to be held between the first body segment and the second body segment, between the first receiving element and the second receiving element, and between the first connecting element and the second connecting element.

In an embodiment 5 of the apparatus 1 according to the invention, the apparatus 1 is designed according to its embodiment 1, wherein the article holder is primarily composed of wire.

In an embodiment 6 of the apparatus 1 according to the invention, the apparatus 1 is designed according to its embodiment 1, wherein the article receiving section is substantially perpendicular to the connecting section.

In an embodiment 7 of the apparatus 1 according to the invention, the apparatus 1 is designed according to its embodiment 1, wherein the connecting section is substantially U-shaped or substantially V-shaped.

In an embodiment 8 of the apparatus 1 according to the invention, the apparatus 1 is designed according to its embodiment 1, wherein the first receiving element is connected to the first connecting element and the second receiving element is connected to the second connecting element.

In an embodiment 9 of the apparatus 1 according to the invention, the apparatus 1 is designed according to its embodiment 4, wherein the first body segment is connected to the first connecting element and the second body segment is connected to the second connecting element.

In an embodiment 10 of the apparatus 1 according to the invention, the apparatus 1 is designed according to its embodiment 1, further comprising a frame, a moveable linkage rod and a moveable lever, wherein the frame supports the article holder, the moveable linkage rod and the moveable lever, wherein the moveable linkage rod is connected to the moveable lever and the moveable lever is connected to the article holder, and wherein movement of the moveable linkage rod causes the article holder to rotate.

A contribution to solving at least one of the objects according to the invention is made by an embodiment 11 of an apparatus 2 for holding one or more articles, the apparatus 2 comprising an article holder comprising an article receiving section and a connecting section, wherein the article holder is configured to move between an open position and a closed position, wherein the article holder is at rest in the closed position and under tension in the open position, wherein the article receiving section comprises a first receiving element and a second receiving element and the connecting section comprises a first connecting element moveably, preferably pivotably, connected to a second connecting element, wherein the article holder is configured such that a force applied on the article receiving section or the connecting section causes the article holder to move from the closed position to the open position to release the articles from between the first receiving element and the second receiving element, and a release of the force causes the article holder to move from the open position to the closed position to hold the articles between the first receiving element and the second receiving element.

In an embodiment 12 of the apparatus 2 according to the invention, the apparatus 2 is designed according to its embodiment 11, wherein the article has a body section and a neck section, and the first receiving element and the second receiving element contact substantially opposite sides of the body section to hold the articles.

In an embodiment 13 of the apparatus 2 according to the invention, the apparatus 2 is designed according to its embodiment 11, wherein the article has a body section and a neck section, and the first receiving element and the second receiving element contact substantially opposite sides of the neck section to hold the articles.

In an embodiment 14 of the apparatus 2 according to the invention, the apparatus 2 is designed according to its embodiment 11, wherein the article holder further comprises a body receiving section, wherein the body receiving section comprises a first body segment and a second body segment, wherein the article holder is configured such that a force applied on the body receiving section, the article receiving section or the connecting section causes the article holder to move from the closed position to the open position to release the articles, and a release of the force causes the article holder to move from the open position to the closed position to hold the articles between the first body segment and the second body segment, between the first receiving element and the second receiving element, and between the first connecting element and the second connecting element.

In an embodiment 15 of the apparatus 2 according to the invention, the apparatus 2 is designed according to its embodiment 11, wherein the article holder is primarily composed of wire.

In an embodiment 16 of the apparatus 2 according to the invention, the apparatus 2 is designed according to its embodiment 11, wherein the article receiving section is substantially perpendicular to the connecting section.

In an embodiment 17 of the apparatus 2 according to the invention, the apparatus 2 is designed according to its embodiment 11, wherein the connecting section is substantially U-shaped or substantially V-shaped.

In an embodiment 18 of the apparatus 2 according to the invention, the apparatus 2 is designed according to its embodiment 11, wherein the first receiving element is connected to the first connecting element and the second receiving element is connected to the second connecting element.

In an embodiment 19 of the apparatus 2 according to the invention, the apparatus 2 is designed according to its embodiment 14, wherein the first body segment is connected to the first connecting element and the second body segment is connected to the second connecting element.

In an embodiment 20 of the apparatus 2 according to the invention, the apparatus 2 is designed according to its embodiment 11, further comprising a frame, a moveable linkage rod and a moveable lever, wherein the frame supports the article holder, the moveable linkage rod and the moveable lever, wherein the moveable linkage rod is connected to the moveable lever and the moveable lever is connected to the article holder, and wherein movement of the moveable linkage rod causes the article holder to rotate.

A contribution to solving at least one of the objects according to the invention is made by an embodiment 21 an apparatus 3 for holding one or more articles, the apparatus 3 comprising an article holder comprising an article receiving section and a connecting section, wherein the article holder is configured to move between an open position and a closed position, wherein the article holder is at rest in the open position and under tension in the closed position, wherein the article receiving section comprises a first receiving element and a second receiving element and the connecting section comprises a first connecting element moveably, preferably pivotably, connected to a second connecting element, wherein the article holder is configured such that a force applied on the article receiving section or the connecting section causes the article holder to move from the open position to the closed position to hold the articles between the first receiving element and the second receiving element, and a release of the force causes the article holder to move from the closed position to the open position to release the articles from between the first receiving element and the second receiving element.

In an embodiment 22 of the apparatus 3 according to the invention, the apparatus 3 is designed according to its embodiment 21, wherein the article has a body section and a neck section, and the first receiving element and the second receiving element contact substantially opposite sides of the body section to hold the articles.

In an embodiment 23 of the apparatus 3 according to the invention, the apparatus 3 is designed according to its embodiment 21, wherein the article has a body section and a neck section, and the first receiving element and the second receiving element contact substantially opposite sides of the neck section to hold the articles.

In an embodiment 24 of the apparatus 3 according to the invention, the apparatus 3 is designed according to its embodiment 21, wherein the article holder further comprises a body receiving section, wherein the body receiving section comprises a first body segment and a second body segment, wherein the article holder is configured such that a force applied on the body receiving section, the article receiving section or the connecting section causes the article holder to move from the closed position to the open position to release the articles, and a release of the force causes the article holder to move from the closed position to the open position to hold the articles between the first body segment and the second body segment, between the first receiving element and the second receiving element, and between the first connecting element and the second connecting element.

In an embodiment 25 of the apparatus 3 according to the invention, the apparatus 3 is designed according to its embodiment 21, wherein the article holder is primarily composed of wire.

In an embodiment 26 of the apparatus 3 according to the invention, the apparatus 3 is designed according to its embodiment 21, wherein the article receiving section is substantially perpendicular to the connecting section.

In an embodiment 27 of the apparatus 3 according to the invention, the apparatus 3 is designed according to its embodiment 21, wherein the connecting section is substantially U-shaped or substantially V-shaped.

In an embodiment 28 of the apparatus 3 according to the invention, the apparatus 3 is designed according to its embodiment 21, wherein the first receiving element is connected to the first connecting element and the second receiving element is connected to the second connecting element.

In an embodiment 29 of the apparatus 3 according to the invention, the apparatus 3 is designed according to its embodiment 24, wherein the first body segment is connected to the first connecting element and the second body segment is connected to the second connecting element.

In an embodiment 30 of the apparatus 3 according to the invention, the apparatus 3 is designed according to its embodiment 21, further comprising a frame, a moveable linkage rod and a moveable lever, wherein the frame supports the article holder, the moveable linkage rod and the moveable lever, wherein the moveable linkage rod is connected to the moveable lever and the moveable lever is connected to the article holder, and wherein movement of the moveable linkage rod causes the article holder to rotate.

### Figures

Figure 1 shows an article in the shape of a glass vial.
Figures 2A-B show an article holder having a connecting section and an article receiving section.
Figures 3A-D show variations of the connecting section.
Figures 4A-B show an article holder having a connecting section, an article receiving section and a body receiving section.
Figure 5 shows possible steps for loading articles into an article holder configured to be normally closed.
Figure 6 shows possible steps for loading articles into an article holder configured to be normally open.
Figures 7A-C show an article holder formed from a sheet of metal.
Figures 8A-E show exemplary details of features of the article holder of Figures 7A-C.
Figure 9 shows exemplary steps to form the article holder of Figures 7A-C from a piece of sheet metal.
Figures 10A-C show components of an exemplary frame that can receive an article holder.
Figures 11A-D show an exemplary frame with exemplary article holders in various degrees of tilt.
Figure 12 shows a cage loaded with multiple assembled frames.

The present disclosure pertains to apparatuses that securely hold articles, and more specifically, to apparatuses that securely hold glass articles such as pharmaceutical vials during various stages of ion-exchange processing.

In some embodiments of the disclosure, there is an apparatus for holding one or more articles, the apparatus comprising an article holder comprising an article receiving section and a connecting section. The article holder can be configured to move between an open position and a closed position. The article receiving section can comprise a first receiving element and a second receiving element and the connecting section can comprise a first connecting element movably connected to a second connecting element. When the article holder moves from the open position to the closed position, the distance between the first receiving element and the second receiving element can decrease and the distance between the first connecting element and the second connecting element can decrease, thereby causing the articles to be held between the first receiving element and the second receiving element.

In some embodiments of the disclosure, there is an apparatus for holding one or more articles, the apparatus comprising an article holder comprising an article receiving section and a connecting section. The article holder can be configured to move between an open position and a closed position. The article holder can be at rest in the closed position and under tension in the open position. The article receiving section can comprise a first receiving element and a second receiving element and the connecting section can comprise a first connecting element movably connected to a second connecting element. The article holder can be configured such that a force applied on the article receiving section or on the connecting section can cause the article holder to move from the closed position to the open position to release the articles from between the first receiving element and the second receiving element, and a release of the force can cause the article holder to move from the open position to the closed position to hold the articles between the first receiving element and the second receiving element.

In some embodiments of the disclosure, there is an apparatus for holding one or more articles, the apparatus comprising an article holder comprising an article receiving section and a connecting section. The article holder can be configured to move between an open position and a closed position. The article holder can be at rest in the open position and under tension in the closed position. The article receiving section can comprise a first receiving element and a second receiving element and the connecting section can comprise a first connecting element movably connected to a second connecting element. The article holder can be configured such that a force applied on the article receiving section or the connecting section causes the article holder to move from the open position to the closed position to hold the articles between the first receiving element and the second receiving element, and a release of the force causes the article holder to move from the closed position to the open position to release the articles from between the first receiving element and the second receiving element.

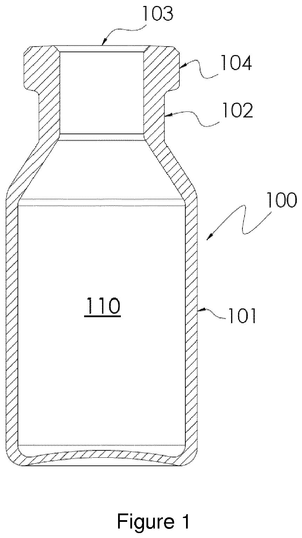

As shown in Figure 1, articles 100 can generally be composed of a body section 101, a neck section 102 above said body section 101, and an opening 103 leading through the neck section 102 to the interior volume 110 surrounded by said body section 101. The opening section 103 can be surrounded by a collar 104 extending outward from the top of the neck section 102 of the article 100. The article holders disclosed herein are not limited to holding the articles shown in Figure 1. For example, substantially cylindrical articles can be held, such as pharmaceutical syringes, which can be open on opposing ends. Furthermore, the articles are not required to have axial symmetry.

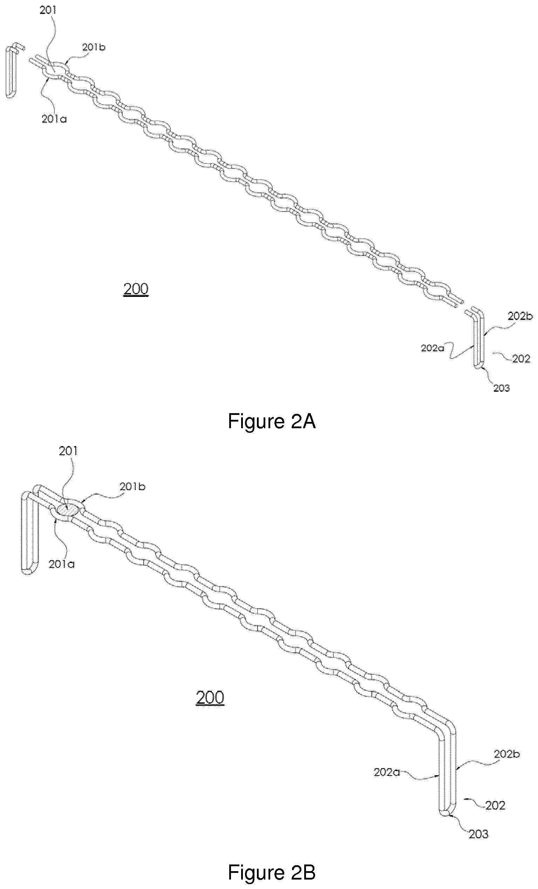

The article holder 200 can hold one or more articles 100. Figures 2A-B show the functional elements of an exemplary article holder 200 having a multitude of article receiving sections 201 having first and second receiving elements 201 a and 201b. Individual first receiving elements 201a can oppose individual second receiving elements 201b to form individual article receiving sections 201. In some embodiments, the first and second receiving elements 201a and 201b are substantially semi-circular in shape to form article receiving sections 201 that are substantially circular in shape. The shape of the article receiving sections 201 can be slightly larger than the neck section 102 of articles 100 and can conform to the shape of the articles 100 to be held. A multitude of said first and second receiving elements 201a and 201b can be connected to connecting section 202, wherein a multitude of first receiving elements 201a can be connected in a row to first connecting element 202a and a multitude of second receiving elements 201b can be connected in a row to second connecting element 202b.

Connecting section 202 can include first connecting element 202a, second connecting element 202b and connecting segment 203. More specifically, a row of first receiving elements 201a can be connected to first connecting element 202a, and a row of second receiving elements 201b can be connected to second connecting element 202b. The first and second connecting elements 202a and 202b can be connected to connecting segment 203 located between the first and second connecting elements 202a and 202b.

Connecting segment 203 helps permit the distance between the first receiving element 201a and the second receiving element 201b to increase or decrease and helps permit the distance between the first connecting element 202a and the second connecting element 202b to increase or decrease, which causes the articles 100 to be held or released by the first receiving element 201a and the second receiving element 201b. The increased and decreased distances can occur by applying a force on the article receiving section 201 or on the connecting section 202. For example, if the article holder 200 is under tension in the closed position, a force can be applied to pull apart the first receiving element 201a and the second receiving element 201b, and/or a force can be applied to pull apart the first connecting element 202a and the second connecting element 202b, to cause the article holder 200 to move from the closed position to the open position to release the articles 100 from between the first receiving element 201a and the second receiving element 201b. When the force is released, the article holder 200 can automatically move and return from the open position to the closed position, such as when the connecting segment 203 functions like a spring, to hold the articles 100 between the first receiving element 201a and the second receiving element 201b. Alternatively, if the article holder 200 is under tension in the open position, a force can be applied to push together the first receiving element 201a and the second receiving element 201b, and/or a force can be applied to push together the first connecting element 202a and the second connecting element 202b, to cause the article holder 200 to move from the open position to the closed position to hold the articles 100 between the first receiving element 201a and the second receiving element 201b. When the force is released, the article holder 200 can automatically move and return from the closed position to the open position, such as when the connecting segment 203 is resilient like a spring, to release the articles 100 from between the first receiving element 201a and the second receiving element 201b.

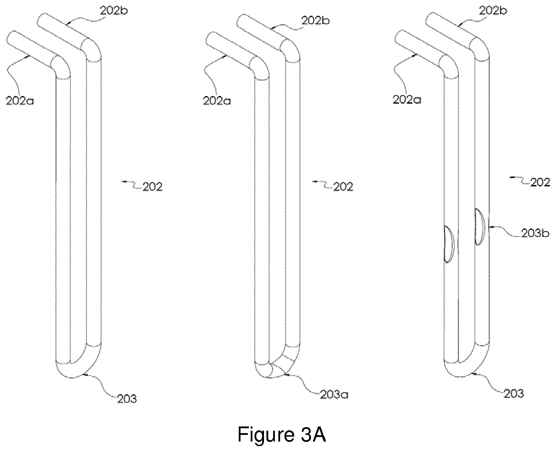

Figures 3A-D show some configurations for the connecting segment 203. Other configurations are also possible. Figure 3A shows a substantially U-shaped connecting segment 203 that connects the first and second connecting elements 202a and 202b at the end opposite the article receiving sections 201.

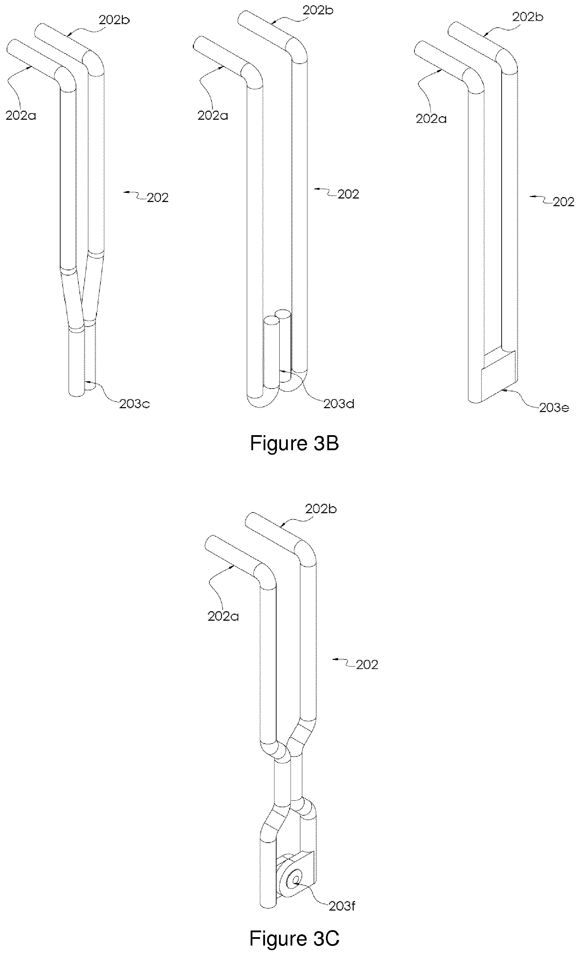

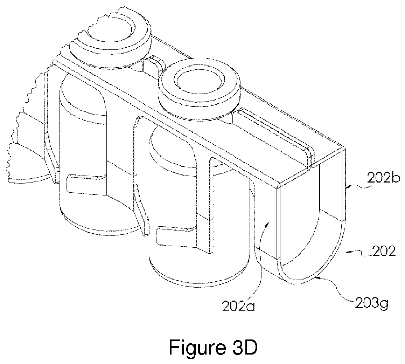

The left-hand image in Figure 3B shows first and second connecting elements 202a and 202b tapering in a V-shape to form connecting segment 203c. The middle image in Figure 3B shows first and second connecting elements 202a and 202b having substantially U-shaped legs that are connected to form connecting segment 203d. The right-hand image in Figure 3B shows first and second connecting elements 202a and 202b having connecting segment 203e formed from a spacer. Figure 3C shows first and second connecting elements 202a and 202b with connecting segment 203f that is a hinge, which can lock by friction or mechanical action for example. Figure 3D shows first and second connecting elements 202a and 202b connected to a substantially U-shaped connecting segment 203g formed from sheet metal. All of the connecting segments 203 can be resilient and moveable to automatically move the article holder 200 from the open position to the closed position, or from the closed position to the open position, when the force is released.

The connecting segment 203 and/or the first and second connecting elements 202a and 202b can be thinned or flattened to facilitate their movement, such as for example at locations 203a or 203b shown in Figure 3A. Each end of the article holder 200 can have different first and second connecting elements 202a and 202b and a different connecting segment 203. The article holder 200 can be formed by joining individual first and second receiving elements 201a and 201b to individual connecting sections 202 as shown for example in Figure 2A or by shaping a closed loop of wire as shown for example in Figure 2B.

Figure 2 shows that the article receiving sections 201 are connected to the end of connecting section 202 opposite the connecting segment 203, but the article receiving sections 201 can be connected at a different location along the length of the connecting section 202, such as at the middle of connecting section 202. In addition, multiple rows of article receiving sections 201 can be used and connected along the length of connecting section 202, such as a first row of article receiving sections 201 being at the middle of connecting section 202 and a second row of article receiving sections 202 being at the end of connecting section 202 opposite the connecting segment 203.

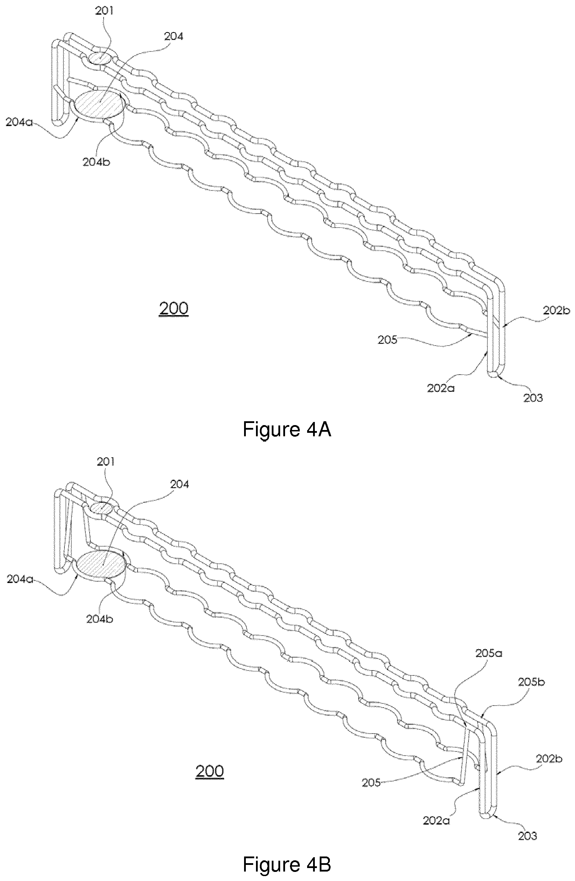

The article holder 200 can include a body receiving section 204, with or without an article receiving section 201. Figures 4A-B show the functional elements of an exemplary article holder 200 having a multitude of body receiving sections 204 having first and second receiving elements 204a and 204b. Individual first receiving elements 204a can oppose individual second receiving elements 204b to form individual body receiving sections 204. In some embodiments, the first and second receiving elements 204a and 204b are substantially semi-circular in shape to form body receiving sections 204 that are substantially circular in shape. The shape of the body receiving sections 204 can be slightly larger than the body section 101 of articles 100 and can conform to the shape of the articles 100 to be held. A multitude of said first and second receiving elements 204a and 204b can be connected to connecting section 205, wherein a multitude of first receiving elements 204a can be connected in a row to first connecting element 205a and a multitude of second receiving elements 204b can be connected in a row to second connecting element 205b.

Connecting section 205 can include first and second connecting element 205a and 205b. A row of first receiving elements 204a can be connected to first connecting element 205a, and a row of second receiving elements 204b can be connected to second connecting element 205b.

Connecting segment 205 helps permit the distance between the first receiving element 204a and the second receiving element 204b to increase or decrease, which causes the articles 100 to be held or released by the first receiving element 204a and the second receiving element 204b. Connecting section 205 can be attached to connecting segment 203 as shown in Figure 4A, can be attached to article receiving sections 201 as shown in Figure 4B, or can be attached to both. More specifically, a row of first connecting sections 205a can be attached to first connecting element 202a and a row of second connecting sections 205b can be attached to second connecting element 202b as shown in Figure 4A, a row of first connecting section 205a can be attached to first receiving element 201a and a row of second connecting section 205b can be attached to second receiving element 201b as shown in Figure 4B, or both connections can be made. The first and second receiving elements 204a and 204b can be attached via connecting segments 205 to at least one of first and second connecting elements 202a and 202b, or to at least one of first and second receiving elements 201a and 201b, or a combination thereof.

The body receiving elements can be rigidly attached via connecting segments 205 to either at least one leg 202a or 202b of the connecting element 202, or at least one end of the article receiving section, and any combination thereof The increased and decreased distances can occur by applying a force on the body receiving section 204. For example, if the article holder 200 is under tension in the closed position, a force can be applied to pull apart the first receiving element 204a and the second receiving element 204b, and/or a force can be applied to pull apart the first connecting element 205a and the second connecting element 205b, to cause the article holder to move from the closed position to the open position to release the articles 100 from between the first receiving element 204a and the second receiving element 204b. When the force is released, the article holder 200 can automatically move from the open position and return to the closed position, such as when the connecting segment 203 functions like a spring, to hold the articles 100 between the first receiving element 204a and the second receiving element 204b. Alternatively, if the article holder 200 is under tension in the open position, a force can be applied to push together the first receiving element 204a and the second receiving element 204b, and/or a force can be applied to push together the first connecting element 205a and the second connecting element 205b, to cause the article holder 200 to move from the open position to the closed position to hold the articles 100 between the first receiving element 204a and the second receiving element 204b. When the force is released, the article holder 200 can automatically move from the closed position and return to the open position, such as when the connecting segment 203 is resilient like a spring, to release the articles 100 from between the first receiving element 204a and the second receiving element 204b.

The first and second receiving elements 201a and 201b can be in substantially the same plane, substantially mirror images of each other, and substantially perpendicular to the plane of the first and second connecting elements 202a and 202b. The first and second receiving elements 204a and 204b can be in substantially the same plane, substantially mirror images of each other, and substantially perpendicular to the plane of the first and second connecting elements 202a and 202b.

The article holder 200 can have just article receiving sections 201, just body receiving sections 204, or both. In the embodiments of Figures 4A-B, the article holder 200 has article receiving sections 201 and body receiving sections 204. In the embodiments of Figure 2A-B, the article holder 200 has article receiving sections 201 without body receiving sections 204. When body receiving sections 204 are present, they operate similarly to the article receiving sections 201, except they hold the body section 101 of the articles 100. The articles 100 only need to be held at one location, such as in the vicinity of the neck section 102 or in the vicinity of the body section 101, so any reference herein to the article receiving sections 201 is not limited to holding the articles 100 at the neck section 102, and any reference herein to the body receiving sections 204 is not limited to holding the articles 100 at the body section 101.

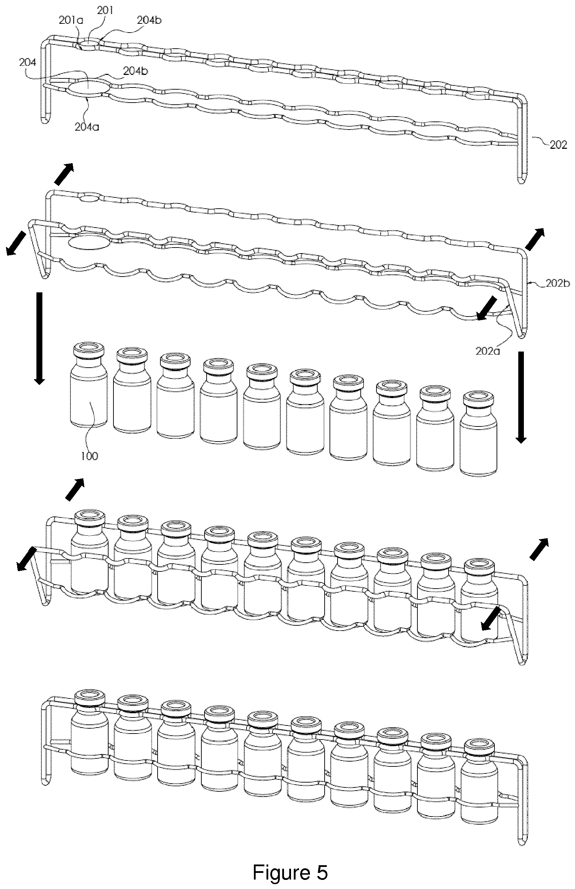

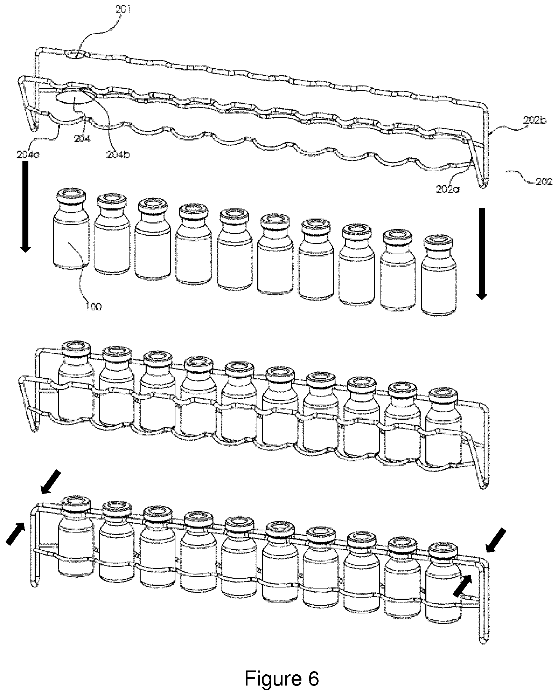

The embodiments shown in Figures 5-6 demonstrate that the article holder 200 can be manipulated between a closed position that holds articles 100 within the article holder 200 and an open position that releases articles 100 from the article holder 200. Figure 5 shows possible steps for loading articles 100 into an article holder 200 configured to be normally closed wherein a force is needed to open the article holder 200. Figure 6 shows possible steps for loading articles into an article holder configured to be normally open wherein a force is needed to close the article holder 200. Article receiving sections 201, connecting section 202 and body receiving sections 204 are moveable and cooperate to hold and release articles 100 as shown in Figures 5-6. It should be appreciated that articles 100 can be held using an article holder 200 having one or more article receiving sections 201, one or more body receiving section 204, or both one or more article receiving sections 201 and one or more body receiving section 204.

The article holder 200 is configured to move between an open position and a closed position. As shown for example in Figures 5-6, when the article holder 200 moves from the open position to the closed position, the distance between the first receiving element 201a and the second receiving element 201b decreases (ie the article receiving sections 201 squeeze and hold the articles 100, for example at neck section 102) and the distance between the first connecting element 202a and the second connecting element 202b decreases, thereby causing the articles 100 to be held by the article receiving sections 201 between the first receiving element 201a and the second receiving element 201b. If the body receiving section 204 is included, when the article holder 200 moves from the open position to the closed position, the distance between the first receiving element 204a and the second receiving element 204b decreases (ie the body receiving sections 204 squeezes and holds the articles 100 between first receiving element 204a and first receiving element 204b, for example at body section 101).

One way of moving the article holder 200 between the open and closed position is to apply a force on connecting section 205, such as on one or more of the first and second connecting elements 205a and 205b. The force opens the article holder 200 so that articles 100 can be placed within the article receiving sections 201 between the first receiving element 201a and the second receiving element 201b, and/or if a body receiving section 204 is included, between the first receiving element 204a and the second receiving element 204b.

Conversely, a release of the force causes the article holder 200 to close and hold the articles 100. The closing causes articles 100 to be held by article receiving sections 201 between the first receiving element 201a and the second receiving element 201b, and/or if a body receiving section 204 is included, between the first receiving element 204a and the second receiving element 204b. The force can be applied manually or automatically.

In addition, the article holder 200 can be opened and closed by applying a force on article receiving sections 201, such as on the first receiving element 201a or the second receiving element 201b, and/or by applying a force on body receiving sections 204, such as on the first receiving element 204a or the second receiving element 204b. The force only needs to be applied on one of the article receiving sections 201, on the connecting section 202, or on one of the body receiving sections 204 to open and close the article holder 200.

The opening of the article holder 200 causes the articles 100 that were held between the first receiving element 201a and the second receiving element 201b to be released (and if the article holder 200 includes body receiving sections 204, causes the articles 100 that were held between the first receiving element 204a and the second receiving element 204b to be released).

Conversely, when the article holder 200 is closed, the articles 100 become held between the first receiving element 201a and the second receiving element 201b (and if the article holder 200 includes body receiving sections 204, become held between the first receiving element 204a and the second receiving element 204b).

The article holder 200, and particularly the connecting section 202, can operate similar to a spring such that the application of the force creates a tension in the article holder 200 when the article holder 200 is in the open position and a release of the force causes the tension to release and the article holder 200 to return to its closed position when the article holder 200 is at rest. The article holder 200 can therefore be at rest in the closed position and under tension in the open position. See for example the embodiment of Figure 5. Alternatively, the article holder 200, and particularly the connecting section 202, can operate similar to a spring such that the application of the force creates a tension in the article holder 200 when the article holder 200 is in the closed position and a release of the force causes the tension to release and the article holder 200 to return to its open position when the article holder 200 is at rest. The article holder 200 can therefore be at rest in the open position and under tension in the closed position. See for example the embodiment of Figure 6.

One way to facilitate the opening and closing of the article holder 200 is to use a connecting section 202 having a first connecting element 202a moveably connected to a second connecting element 202b, wherein the first receiving element 201a is connected (perpendicularly for example) to the first connecting element 202a and the second receiving element 201b is connected (perpendicularly for example) to the second connecting element 202b. In some embodiments, when the article holder 200 is moved from the closed position to the open position by the application of a force, the moveable connection resists the force and the movement, such that a release of the force causes the article holder 200 to return to the closed position. See for example the embodiment of Figure 5. In some embodiments, when the article holder 200 is moved from the open position to the closed position by the application of a force, the moveable connection resists the force and the movement, such that a release of the force causes the article holder 200 to return to the open position. See for example the embodiment of Figure 6. The moveable connection is a resilient connection that is bendable upon application of a force, wherein a release of the force causes the moveable connection to automatically return to its original position.

Figure 5 illustrates how articles 100 can be inserted into an article holder 200 which is normally closed. i.e. which is in the closed position when no external force is applied. First, a sufficient force can be applied to spread apart first and second connecting elements 202a and 202b. This gradually increases the distance between the first and second receiving elements 201a and 201b as well as between the first and second receiving elements 204a and 204b, and opens the article holder 200 which allows the insertion of one or more articles 100 at a time. Once the first and second receiving elements 201a and 201b are aligned with the respective sections of the articles 100, the force can be gradually released to close the article holder 200. The closing causes articles 100 to be held between the first and second receiving elements 201a and 201b, and if a body receiving section 204 is included, held between the first and second receiving elements 204a and 204b. The articles 100 and the article holder 200 will not release the articles 100 without the application of force. Said force can be applied manually or automatically.

Figure 6 illustrates how articles 100 can be inserted into an article holder 200 which is normally open, i.e. which is in the open position when no external force is applied. Once the first and second receiving elements 201a and 201b are aligned with the respective sections of the articles 100, a force can be gradually applied to the first and second connecting elements 202a and 202b to close the article holder 200. The closing causes articles 100 to be held between the first and second receiving elements 201a and 201b, and if a body receiving section 204 is included, held between the first and second receiving elements 204a and 204b. The articles 100 and the article holder 200 will not release the articles 100 unless a force is applied. Said force can be applied manually or automatically, or by spreading and holding apart the first and second connecting elements 202a and 202b in place with a suitable fixture.

The article receiving sections 201 and the body receiving sections 204 in the embodiments illustrated in Figures 5-6 can accommodate ten articles 100, but all of the article holders 200 can have article receiving sections 201 and/or body receiving sections 204 that can accommodate a different number of articles 100. This allows the article holders 200 to hold multiple articles 100 at the same time for efficient processing.

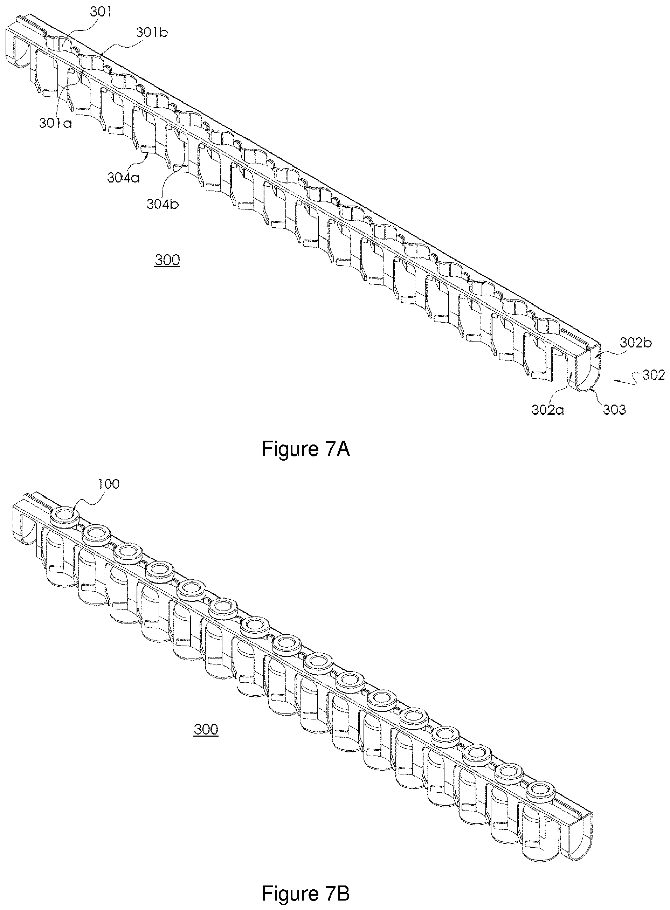

To restrict axial movement of the articles 100 in the article holder 200, retaining elements can be placed over the top and/or bottom portions of the article 100. The retaining elements can be attached to any part of the article holder 200, can conform to the shape of the articles 100, and/or can provide a spring-like action on contact with the articles 100. The article holder 200 can be formed from wire, such as precision bent stainless steel wire as shown in the embodiments of Figures 5-6. Alternatively, the article holder 200 can be formed from sheet metal as shown in Figures 7A-C, or any other suitable material. Another possible configuration of the article holder of this disclosure is illustrated in Figures 7A-C. As shown therein, the article holder 300 includes article receiving sections 301 with first and second receiving elements 301a and 301b, connecting section 302, first and second connecting elements 302a and 302b, connecting segment 303 and body receiving section 304 with first and second receiving elements 304a and 304b.

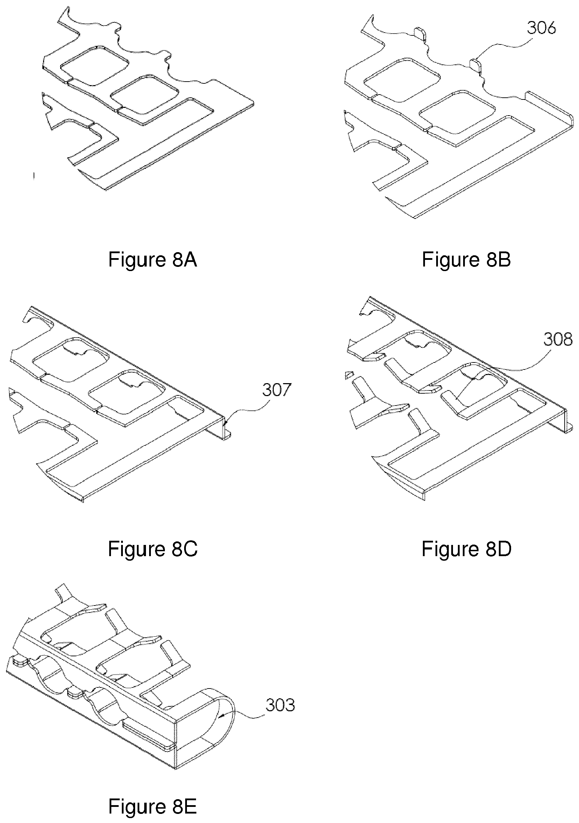

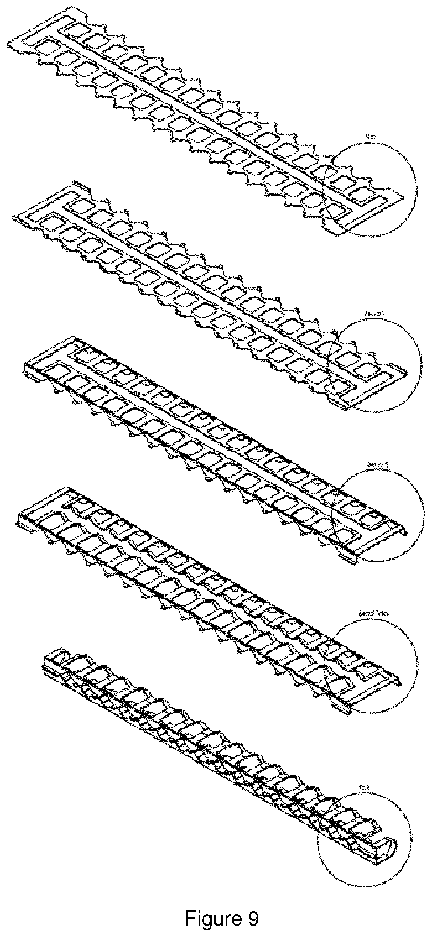

The article holder 300 of Figures 7A-C can be formed from a single sheet of metal or another flexible material. The single sheet of metal or flexible material can be stamped or cut to remove certain portions so that the sheet can be bent or manipulated to be formed into the article holder 300. For example, as shown in Figures 8A-E, a single sheet of metal or another flexible material can be cut from a solid and flat sheet into the configuration shown in Figure 8A. Flanges 306 can be formed by bending or manipulating a portion of the sheet as shown in Figure 8B. Yokes 307 can be formed by bending or manipulating a portion of the sheet as shown in Figure 8C, which can be adjacent to the flanges 306. Tabs 308 can be formed by bending or manipulating a portion of the sheet as shown in Figure 8D, which can be opposite the flanges 306. After the sheet is stamped or cut into its desired shape, the sheet can have two mirror-image halves that can be folded along the midpoint of the width of the sheet. The folding can cause the flanges 306 and yokes 307 of each mirror-image half to contact the corresponding flanges 306 and yokes 307 of the other mirror-image half. The folding can also cause a segment of the sheet to form generally U-shaped connecting segment 303 (or other shape if desired) as shown in Figure 8E. The bending or manipulating of Figures 8A-E is shown in Figure 9 as possible steps of starting with a flat sheet, bending/manipulating the sheet to form flanges 306, bending/manipulating the sheet to form yokes 307, bending/manipulating the sheet to form tabs 308 and two mirror-image halves, and bending/manipulating the sheet to form connection segment 303 and to contact the flanges 306 and yokes 307 from one mirror-image half with the flange 306 and yoke 307 of the other mirror-image half. The article holder 300 can be shaped from a single sheet, or can be made by joining shaped parts, including but not limited to those disclosed in Figures 3A-D.

As shown in Figure 7B, when articles 100 are held by the article holder 300, yokes 307 (article receiving sections 301 with first and second receiving elements 301a and 301b) can contact and hold articles 100. Flanges 306 can extend generally perpendicularly from yokes 307 and vertically between the articles 100 to help ensure that the yokes 301a from one end of the article holder 300 are aligned with the yokes 301b from the opposite end of the article holder 300, and/or to help ensure that the articles 100 are securely held. Tabs 308 (body receiving section 304 with first and second receiving elements 304a and 304b) can be used to contact a middle or lower portion of articles 100 opposite the neck section 102 of the articles 100 to help ensure that the middle and/or lower portion is securely held by the article holder 300.

The article holder 300 illustrated in Figures 7A-C can include one or more of the features of the embodiments described throughout this disclosure. For example, the article holder 300 can be configured to move between an open position and a closed position. The article receiving sections 301 (ie the yokes 307) can comprise a first receiving element 301a and a second receiving element 301b and the connecting section 302 can comprise a first connecting element 302a moveably connected to a second connecting element 302b. When the article holder moves from the open position to the closed position, the distance between the first receiving element 301a and the second receiving element 301b can decrease and the distance between the first connecting element 302a and the second connecting element 302b can decrease, thereby causing the articles 100 to be held between the first receiving element 301a and the second receiving element 301b.

In addition, the article holder 300 can be at rest in the closed position and under tension in the open position. The article receiving section 301 can comprise a first receiving element 301a and a second receiving element 301b and the connecting section 302 can comprise a first connecting element 302a moveably connected to a second connecting element 302b. The article holder 300 can be configured such that a force applied on the article receiving section 301 or on the connecting section 302 can cause the article holder 300 to move from the closed position to the open position to release the articles 100 from between the first receiving element 301a and the second receiving element 301b, and a release of the force can cause the article holder 300 to move from the open position to the closed position to hold the articles 100 between the first receiving element 301a and the second receiving element 301b.

In addition, the article holder 300 can be at rest in the closed position and under tension in the open position. The article receiving section 301 can comprise a first receiving element 301a and a second receiving element 301b and the connecting section 302 can comprise a first connecting element 302a moveably connected to a second connecting element 302b. The article holder 300 can be configured such that a force applied on the article receiving section 301 or on the connecting section 302 can cause the article holder 300 to move from the closed position to the open position to release the articles 100 from between the first receiving element 301a and the second receiving element 301b, and a release of the force can cause the article holder 300 to move from the open position to the closed position to hold the articles 100 between the first receiving element 301a and the second receiving element 301b.

The article holder 200 and components thereof illustrated in Figures 2-6 can be formed from wire, such as shaped steel wire, but all of the article holders of the current disclosure and/or components thereof can be formed from any other material that can hold articles, such as for example the embodiment illustrated in Figures 3D and 7A-C formed from a planar sheet, or the embodiment of Figure 13 having an article receiving section formed from strips of material. It is beneficial to use a resilient material that can function like a spring so that the release of the force causes the article holder to automatically return to the closed position (or automatically return to the open position in other embodiments). However, the article holder does not need to function like a spring and can be manually or automatically opened and closed if desired. The first and second receiving elements 201a/301a and 201b/301b can have substantially circular openings to hold articles 100, however in other embodiments, the first and second receiving elements 201a/301a and 201b/301b can have other geometries, such as for example square. When the article holder 200/300 is at rest, the first and second receiving elements 201a/301a and 201b/301b can be spaced apart from each other at a distance that is slightly smaller than the diameter of the portion of the articles 100 to be held (such as the neck section 102 or the body section 101). These slightly smaller distances help ensure that the articles 100 are securely held due to the force exerted on the articles 100 by the article holder 200/300.

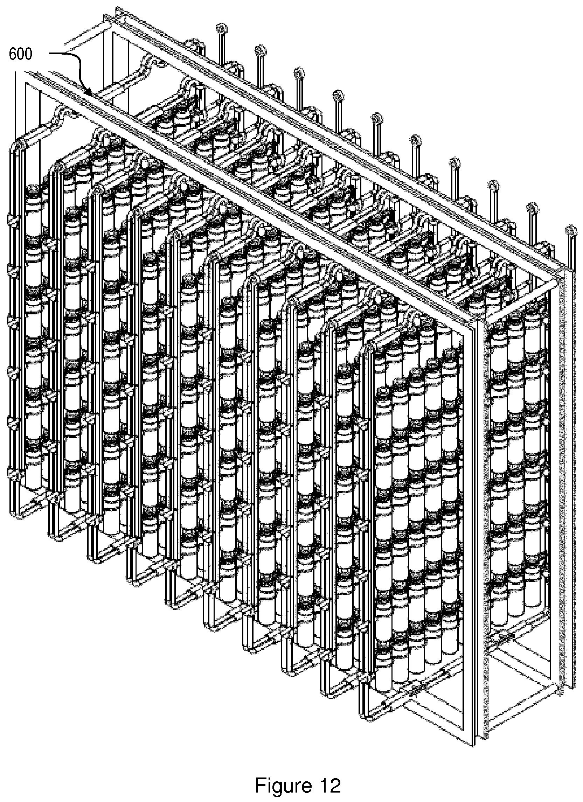

One or more article holders 200/300 can be placed in a frame 500 which, for example, can provide means to tip/tilt the articles 100 in a controlled fashion, such as to empty the articles 100 during ion exchange processing. The frame 500 can be made from wire or any other suitable material. As shown in Figure 12, several frames 500 can be combined in a cage 600 to form a large unit that holds a plurality of article holders 200/300.

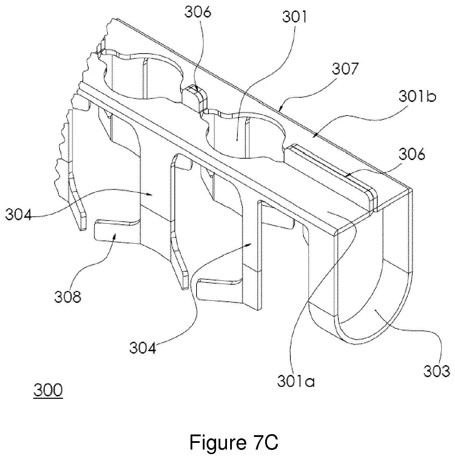

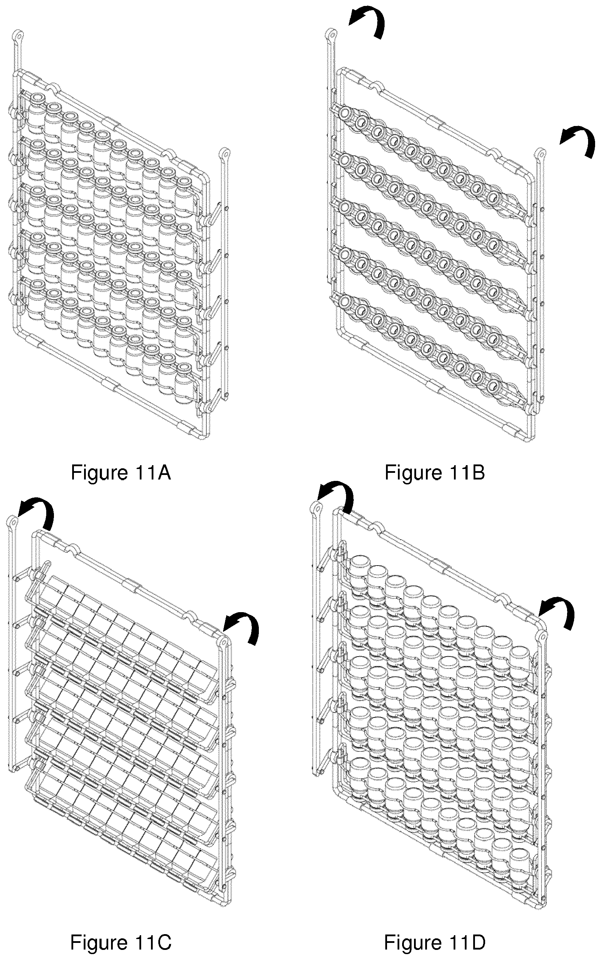

As shown in Figure 7A, the frame 500 can comprise one or more of first subframe 501, second subframe 502, clips 503, moveable levers 504, moveable linkage rods 505 and eyes 506. The frame 500 can support the article holder 200, the moveable linkage rods 503 and/or the moveable lever 505. The frame 500 can be assembled by placing the moveable levers 504 between the subframes 501,502 and then connecting the subframes 501,502 with clips 503 as shown in Figure 11B to secure the subframes 501,502 to each other and hold the moveable levers 504 therebetween. The moveable linkage rods 505 can be attached to the moveable levers 504 in any manner, such as with suitable pins for example. Moveable levers 504 can have slots to receive article holder 200/300, for example to receive connecting section 202/302 of the article holder 200/300. Figure 7C shows a frame 500 loaded with multiple article holders 200/300 and multiple articles 100.

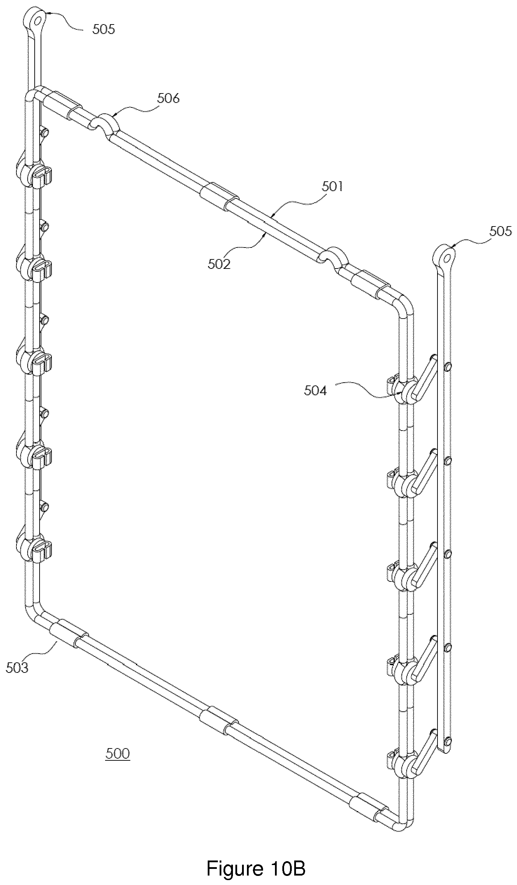

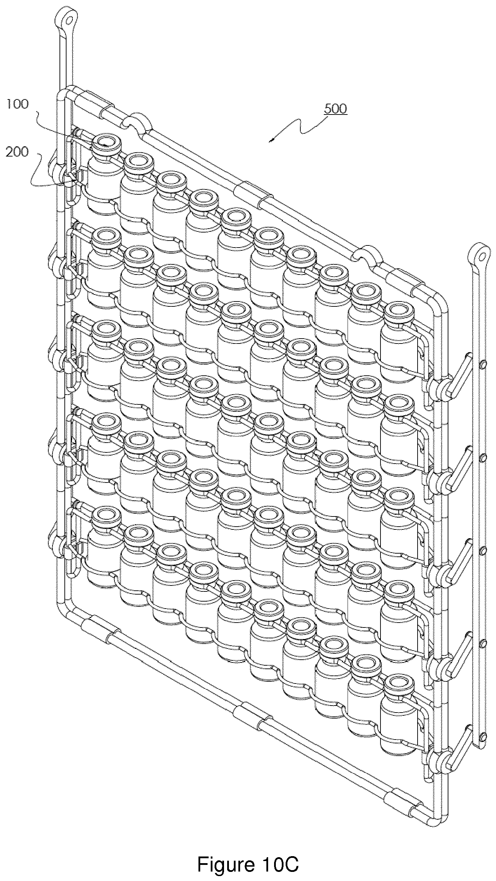

The moveable linkage rod 505 can be connected to one or more moveable levers 504 (see Figure 10B) and a moveable lever 504 can connected to the connecting section 202/302 of an article holder 200/300 (see Figure 10C). Movement of the moveable linkage rod 505 can cause the moveable levers 504 to rotate, which in turn can cause the article holder 200/300 to rotate. Rotation of the article holder 200/300 can cause the articles 100 to tip/tilt.

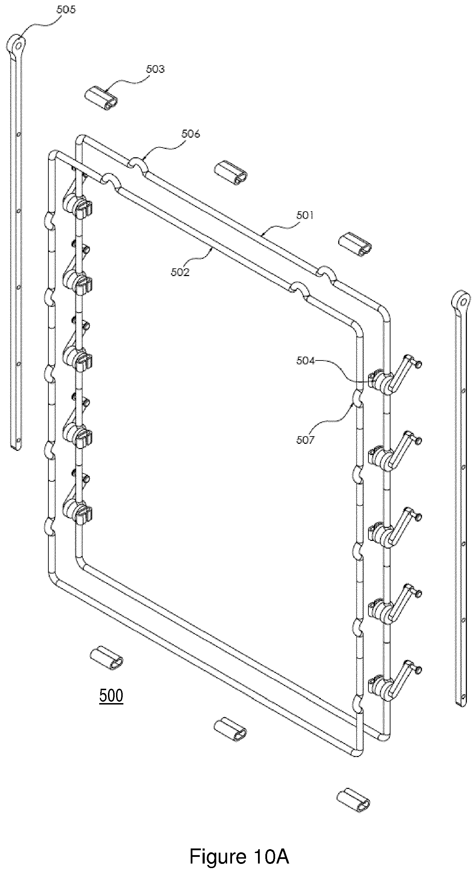

In Figures 10A-C, the moveable linkage rod 505 can be moved in a direction parallel to the length of the frame 500. This movement can cause the moveable levers 504 to rotate in a clockwise or counterclockwise direction relative to the length of the frame 500, which in turn can cause the article holder 200/300 to tip/tilt relative to the length of the frame 500. This tipping/tiling can turn the articles 100 clockwise or counterclockwise to and from upside-down to empty the contents of the articles 100 during ion exchange processing for example. Movement of the moveable linkage rod 505 in the opposite direction parallel to the length of the frame 500 can cause the moveable levers 504 to rotate in the opposite clockwise or counterclockwise direction relative to the length of the frame 500, which in turn can cause the article holder 200/300 to move toward a non-tipping/tilting position that does not empty the contents of the articles 100. Figures 11A-D show the article holder 200/300 in various degrees of tilt. The articles 100 can be pharmaceutical vials and the article holders 200/300 can be tilted to varying degrees to ensure that the articles 100 are completely filled with processing fluid and without entrapment of air, and thereafter completely drained by gradually rotating the articles 100 upside down as shown in Figure 11D.

The embodiments in Figures 10A-C and 11A-D use two moveable linkage rods 505, but only one moveable linkage rod 505 is needed to rotate the moveable levers 504. Similarly, the embodiments in Figures 10A-C and 11A-D use two subframes 501,502, but the two subframes 501,502 can be permanently joined as a single frame.

To form an even larger unit, multiple frames 500 can be placed in a cage 600 as shown in Figure 12. The individual frames 500 can be first loaded with articles 100, and the moveable linkage rods 505 can be secured by means to prevent unintentional tilting.

The frames 500 can have a location to attach the frames 500 to the cage 600, such as with eyes 506 as shown in Figure 10B. Similarly, the cage 600 can have a location to attach the frames 500 to the cage 600, such as with hooks that mate with the eyes 506. The bottom of the frame 500 can be attached to the cage 600, such as by sliding the lower portion of the frame 500 into clips attached to the portion of the cage 600. The moveable linkage rods 505 of the individual frames 500 can be connected to a main linkage mechanism to allow all of the articles 100 to be tipped/tilted at the same time.

## Claims

1. An apparatus for holding one or more articles, the apparatus comprising:
an article holder comprising an article receiving section and a connecting section, wherein the article holder is configured to move between an open position and a closed position,
wherein the article receiving section comprises a first receiving element and a second receiving element and the connecting section comprises a first connecting element pivotably connected to a second connecting element, wherein, when the article holder moves from the open position to the closed position, the distance between the first receiving element and the second receiving element decreases and the distance between the first connecting element and the second connecting element decreases, thereby causing the articles to be held between the first receiving element and the second receiving element.

2. The apparatus of claim 1, wherein the article has a body section and a neck section, and the first receiving element and the second receiving element contact substantially opposite sides of the body section to hold the articles.

3. The apparatus of claim 1, wherein the article has a body section and a neck section, and the first receiving element and the second receiving element contact substantially opposite sides of the neck section to hold the articles.

4. The apparatus of claim 1, wherein the article holder further comprises a body receiving section,
wherein the body receiving section comprises a first body segment and a second body segment,
wherein, when the article holder moves from the open position to the closed position, the distance between the first body segment and the second body segment decreases, thereby causing the articles to be held between the first body segment and the second body segment, between the first receiving element and the second receiving element, and between the first connecting element and the second connecting element.

5. The apparatus of claim 1, wherein the article holder is primarily composed of wire.

6. The apparatus of claim 1, wherein the article receiving section is substantially perpendicular to the connecting section.

7. The apparatus of claim 1, wherein the connecting section is substantially U-shaped or substantially V-shaped.

8. The apparatus of claim 1, wherein the first receiving element is connected to the first connecting element and the second receiving element is connected to the second connecting element.

9. The apparatus of claim 4, wherein the first body segment is connected to the first connecting element and the second body segment is connected to the second connecting element.

10. The apparatus of claim 1, further comprising a frame, a moveable linkage rod and a moveable lever, wherein the frame supports the article holder, the moveable linkage rod and the moveable lever, wherein the moveable linkage rod is connected to the moveable lever and the moveable lever is connected to the article holder, and wherein movement of the moveable linkage rod causes the article holder to rotate.
